# EUROPEAN PATENT APPLICATION

(11) **EP 4 568 433 A1**
(43) Date of publication of application: **11.06.2025**
(21) Application number: 24205145.6
(22) Date of filing: 08.10.2024
(51) Int. Cl.: H05K 7/02

(54) **POWER RELAY ASSEMBLY AND BATTERY SYSTEM INCLUDING THE SAME**

(30) Priority: 05.12.2023 KR 20230174427
(71) Applicant: SAMSUNG SDI CO., LTD., Yongin-si, Gyeonggi-do 17084 (KR)
(72) Inventor: Park, Kyung Hoon, 16678 Suwon-si, Gyeonggi-do (KR)
(74) Representative: Gulde & Partner

(57) **Abstract**

The present disclosure provides a power relay assembly (3) including a first case (100), a first accommodation unit (200) inside the first case (100), a relay module (300) in the first accommodation unit (200), and configured to control a flow of a current, a second case (400) on the first case (100), a second accommodation unit (500) inside the second case (400), and separated from the first accommodation unit (200), and a wire module (600) in the second accommodation unit (500), and connected to the relay module (300).

## Description

### BACKGROUND

### 1. Field

The present disclosure relates to a power relay assembly and a battery system including the same.

### 2. Discussion of Related Art

A secondary battery is a battery that can be charged and discharged, unlike a primary battery that cannot be recharged. Low-capacity secondary batteries are used in small portable electronic devices, such as smartphones, feature phones, notebook computers, digital cameras, and camcorders, and high-capacity secondary batteries are widely used as power storage batteries and power source for driving motors in hybrid and electric vehicles, and the like. Such a secondary battery includes an electrode assembly provided with a positive electrode and a negative electrode, a case for accommodating the electrode assembly, electrode terminals connected to the electrode assembly, and the like.

The secondary battery may be used as a battery pack formed of a plurality of unit battery cells connected in series and/or parallel to provide a high energy density. The battery pack may be formed by interconnecting electrode terminals of a plurality of unit batteries to meet a suitable amount of power, for example, to implement a high-power secondary battery for an electric vehicle.

A power relay assembly (PRA) is a power blocking device for connecting and blocking a power source between a battery and a load in electric vehicles and hybrid electric vehicles containing battery packs and is a core part which serves as a main gate for supplying power.

The above-described information disclosed in the technology that forms the background of the present disclosure is only intended to improve understanding of the background of the present disclosure, and may include information that does not constitute the related art.

### SUMMARY

The present disclosure is directed to providing a power relay assembly in which a high-voltage circuit and a low-voltage circuit are separated physically, and a battery system including the same.

These and other aspects of the present disclosure will be described in or will be apparent from the following description of some embodiments of the present disclosure.

According to one or more embodiments, a power relay assembly includes a first case, a first accommodation unit disposed inside the first case, a relay module installed in the first accommodation unit and configured to control a flow of a current, a second case stacked on the first case, a second accommodation unit disposed inside the second case and separated from the first accommodation unit, and a wire module installed in the second accommodation unit and connected to the relay module.

The second accommodation unit may include an accommodation rail configured to be recessed into the second case and into which the wire module is inserted, and a fixing member protruding inwardly to the accommodation rail, and configured to prevent the wire module from being separated from the accommodation rail.

The fixing member may be provided in plural, and the plurality of fixing members may be arranged in (along) an extension direction of the accommodation rail.

The fixing member may be disposed to be spaced apart from a bottom surface of the accommodation rail.

The fixing member may have (e.g., may be formed to have) a smaller cross-sectional area (e.g., the cross-sectional area of the fixing member may decrease) toward an end portion thereof.

The fixing member may include a first surface facing a bottom surface of the accommodation rail, and a second surface substantially opposite or opposite to the first surface, and the second surface may have a curved shape.

The first surface may have a planar shape, and may be disposed substantially perpendicular or perpendicular to an insertion direction of the wire module into the accommodation rail.

The second accommodation unit may further include a drain member configured to guide discharge of moisture introduced into the accommodation rail (i.e., configured to discharge moisture from the accommodation rail).

The drain member may include an inclined surface formed on a bottom surface of the accommodation rail, and including a first end portion, and a second end portion disposed at a relatively lower position than the first end portion, and a transmission hole passing through the second end portion (i.e. the drain member may define a transmission hole adjacent second end portion) and connecting with the first accommodation unit.

The inclined surface may be provided in plural, the inclined surfaces may be arranged in (along) a first direction that is substantially parallel or parallel to an extension direction of the accommodation rail.

Respective heights of the plurality of inclined surfaces may decrease (e.g., gradually decrease) in (along) the first direction.

The second end portion of any one of a pair of inclined surfaces adjacent in the first direction may be disposed at the same height as the first end portion of the other.

The transmission hole may be disposed to face a bottom surface of the first case.

The power relay assembly may further include a discharge hole passing through the bottom surface of the first case and configured to discharge moisture introduced into the first accommodation unit (e.g., configured to discharge moisture from the first accommodation unit) to outside the first case.

The power relay assembly may further include a first fastening member connected to one of the first case or the second case, and a second fastening member connected to another of the first case or the second case, and configured to be coupled to the first fastening member as the second case is seated on the first case.

The power relay assembly may further include a first alignment groove configured to be recessed into one of the first case or the second case and in which the first fastening member is disposed, and a second alignment groove configured to be recessed into the other of the first case and the second case and in which the second fastening member is disposed, wherein the first alignment groove and the second alignment groove may connect (align) with each other as the first fastening member and the second fastening member are disposed to face each other.

An end portion of the second fastening member may be configured to be inserted into the first alignment groove as the second case is seated on the first case in a state in which the first alignment groove and the second alignment groove connected (aligned) with each other.

The power relay assembly may further include a cover coupled to the second case, and covering the second accommodation unit.

According to one or more embodiments, a battery system according includes a battery pack, an inverter connected to the battery pack, and a power relay assembly installed between the battery pack and the inverter, wherein the power relay assembly may include a first case, a first accommodation unit disposed inside the first case, a relay module installed in the first accommodation unit and configured to control a flow of a current, a second case stacked on the first case, a second accommodation unit disposed inside the second case and separated from the first accommodation unit, and a wire module installed in the second accommodation unit and connected to the relay module.

In accordance with one or more embodiments of the present disclosure, because a relay module and a wire module are individually installed in separated spaces, it is possible to facilitate component management, and to reduce or prevent the likelihood of a loss of a signal due to interference between high-voltage current components and low-voltage current components.

In accordance with one or more embodiments of the present disclosure, because moisture generated by a change in temperature or humidity may be smoothly discharged to the outside, it is possible to reduce or prevent damage to electrical components due to a short circuit or the like.

In accordance with one or more embodiments of the present disclosure, it is possible to further improve assemblability by the first fastening member and the second fastening member for integrally coupling the first case to the second case at the same time as the second case is seated on the first case, and by the first alignment groove and the second alignment groove for guiding the fastening operation of the first fastening member and the second fastening member.

However, the aspects obtainable through the present disclosure are not limited to the above aspects, and other aspects that are not mentioned will be clearly understood by those skilled in the art from the following description of the present disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects of the present disclosure together with the detailed description of the present disclosure. However, the present disclosure should not be construed as being limited to the drawings:
FIG. 1 is a block diagram schematically illustrating a configuration of a battery system according to one or more embodiments of the present disclosure;
FIG. 2 is a perspective view schematically illustrating a configuration of a power relay assembly according to one or more embodiments of the present disclosure;
FIG. 3 is an exploded perspective view schematically illustrating a configuration of the power relay assembly according to one or more embodiments of the present disclosure;
FIG. 4 is a perspective view schematically illustrating a configuration of a first case, a first accommodation unit, and a relay module according to one or more embodiments of the present disclosure;
FIG. 5 is a plan view schematically illustrating a configuration of the first case, the first accommodation unit, and the relay module according to one or more embodiments of the present disclosure;
FIG. 6 is a perspective view schematically illustrating a configuration of a second case, a second accommodation unit, and a wire module according to one or more embodiments of the present disclosure;
FIG. 7 is a plan view schematically illustrating a configuration of the second case, the second accommodation unit, and the wire module according to one or more embodiments of the present disclosure;
FIG. 8 is a perspective view schematically illustrating a configuration of the second accommodation unit according to one or more embodiments of the present disclosure;
FIG. 9 is a plan view schematically illustrating a configuration of the second accommodation unit according to one or more embodiments of the present disclosure;
FIG. 10 is a cross-sectional view schematically illustrating a configuration of the second accommodation unit according to one or more embodiments of the present disclosure;
FIGS. 11 and 12 are perspective views schematically illustrating a fastening structure of the first case and the second case according to one or more embodiments of the present disclosure;
FIG. 13 is a front view schematically illustrating a fastening structure of the first case and the second case according to one or more embodiments of the present disclosure; and
FIG. 14 is a plan view schematically illustrating a fastening structure of the first case and the second case according to one or more embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

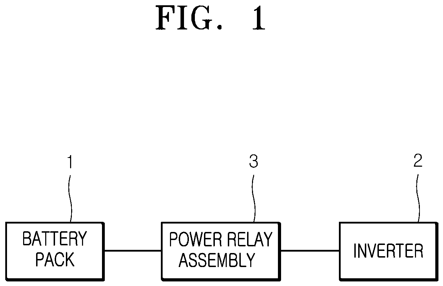

FIG. 1 is a diagram schematically illustrating a configuration of a battery system according to one or more embodiments of the present disclosure.

Referring to FIG. 1, the battery system in one or more embodiments includes a battery pack 1, an inverter 2, and a power relay assembly 3.

The battery pack 1 may include one or more battery modules connected in series or parallel, and a pack housing accommodating a battery module. A plurality of battery modules may be accommodated in a row, or in the form of a grid, inside the pack housing.

The battery module may include a plurality of battery cells and a module housing connected in series or parallel. A plurality of battery cells may be accommodated in a row, or in the form of a grid, inside the module housing.

The battery cell may have a negative electrode terminal and a positive electrode terminal, and may be an independent unit structure that performs charging and discharging operations. For example, the battery cell may be a chargeable and dischargeable secondary battery, and may be a lithium-ion battery or a lithium polymer battery. A cylindrical type, a prismatic type, or a pouch type may be used depending on a shape of the battery cell.

Instead of the battery module, the battery pack 1 may include a cell stack, in which the plurality of battery cells are stacked in a row, and which forms one battery module.

The battery pack 1 may further include a battery management system (BMS). The BMS may include a detection device, a balancing device, and a control device.

The detection device may detect state information indicating states (a voltage, current, temperature, and the like) of the battery pack 1. The detection device may detect a voltage of the battery cell or battery module constituting the battery pack 1. The detection device may detect a current flowing through each battery module constituting the battery module or battery pack. The detection device may detect the battery cell or battery module and/or an ambient temperature at one or more points of the battery.

The balancing device may perform a balancing operation of battery cells constituting the battery pack 1 and/or the battery modules.

The control device may receive the state information (a voltage, current, temperature, and the like) of the battery pack 1 from the detection device. The control device may monitor and calculate the states (a voltage, current, temperature, state of charge (SOC), state of health (SOH), and the like) of the battery pack 1 based on the state information received from the detection device. In one or more embodiments, based on the state monitoring results, the control device may perform control functions (e.g. temperature control, balancing control, and/or charging/discharging control), protection functions (e.g. over-discharge, over-charge, and/or over-current prevention, short circuit, fire extinguishing functions, etc.), or the like. In one or more embodiments, the control device may perform a wired or wireless communication function with an external device (e.g., an upper level controller, vehicle, charger, or personal communication service (PCS)) of the battery pack 1.

The detection device, the balancing device, and the control device may include a processor and a memory.

The processor may be implemented as a central processing unit (CPU) or a system on chip (SOC), may control a plurality of hardware or software components connected to the processor by running an operating system or application, and may perform various data processing and calculations. The processor may be configured to execute at least one command stored in the memory, and to store execution result data in the memory.

At least one command executed by the processor may be stored in the memory. The memory may be implemented as a volatile storage medium and/or non-volatile storage medium, and may be implemented as, for example, a read only memory (ROM) and/or a random access memory (RAM).

The inverter 2 may be connected to the battery pack 1, and may convert power discharged from the battery pack 1 and/or may convert power charged into the battery pack 1. For example, the inverter 2 may be various types of power conversion devices that may convert direct current power supplied from the battery pack 1 into alternating current power, and may transmit the alternating current power to a load, such as a motor, or may convert an alternating current power generated from the load into direct current power, and may transmit the direct current power to the battery pack 1.

A capacitor may be connected to the battery pack 1 and to the inverter 2 in parallel at a front end of the inverter 2.

The power relay assembly 3 may be installed between the battery pack 1 and the inverter 2, and may control power transmission between the battery pack 1 and the inverter 2. The power relay assembly 3 may be operated based on a control signal input from the BMS.

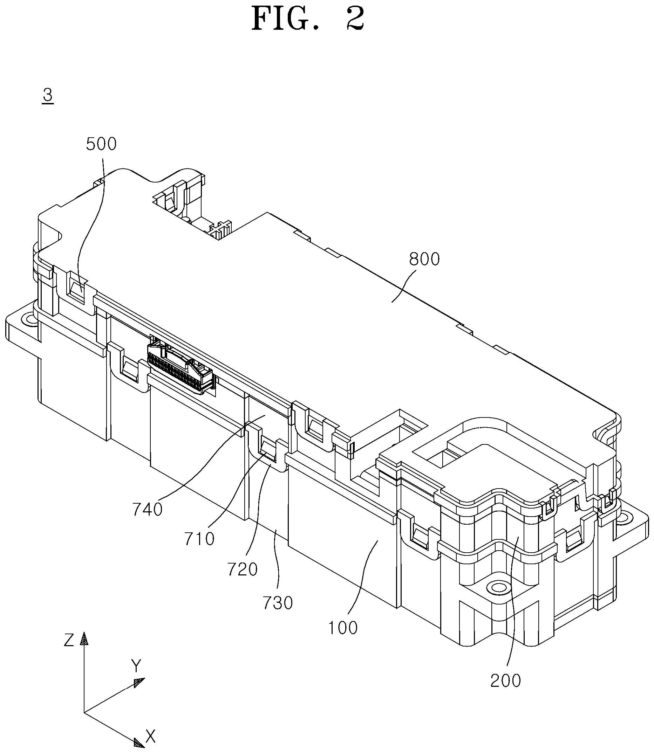

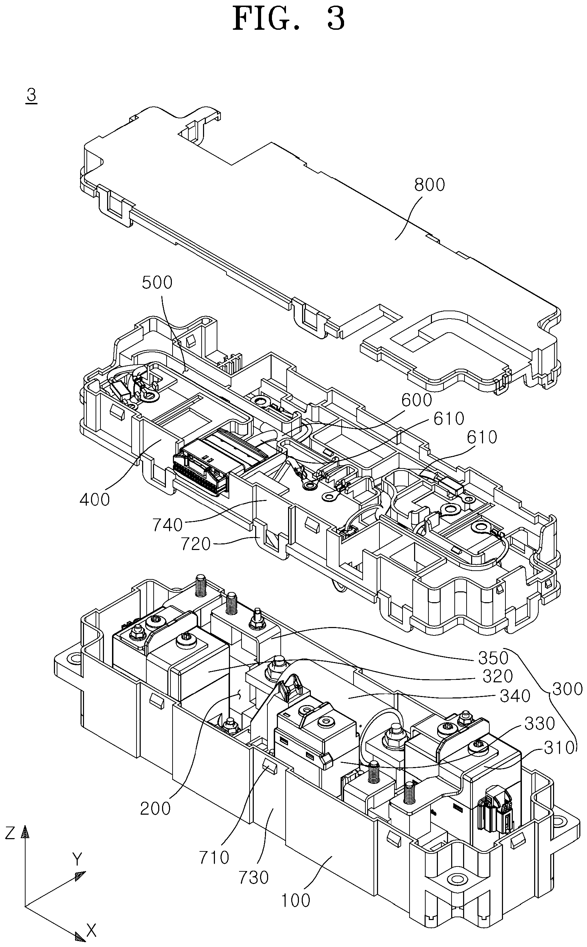

FIG. 2 is a perspective view schematically illustrating a configuration of a power relay assembly according to one or more embodiments of the present disclosure, and FIG. 3 is an exploded perspective view schematically illustrating a configuration of the power relay assembly according to one or more embodiments of the present disclosure.

Referring to FIGS. 2 and 3, the power relay assembly 3 may include a first case 100, a first accommodation unit 200, a relay module 300, a second case 400, a second accommodation unit 500, and a wire module 600.

The first case 100 may form an exterior of one side of the power relay assembly 3.

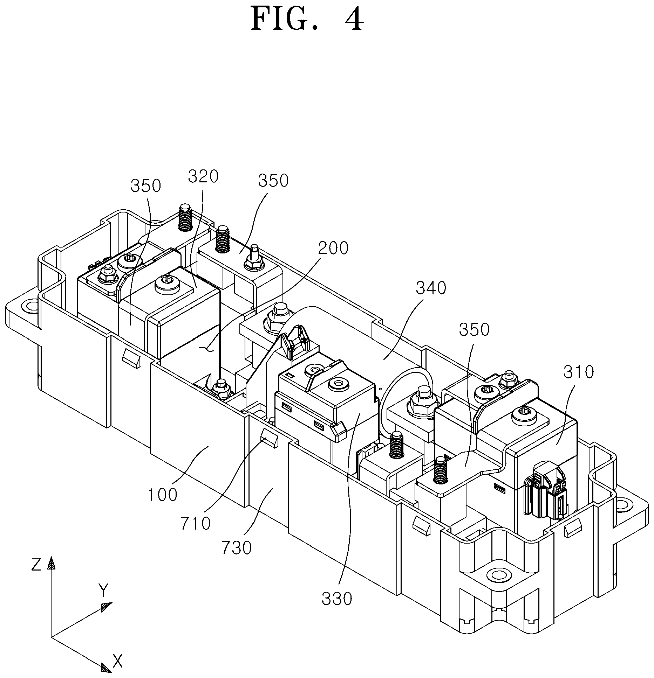

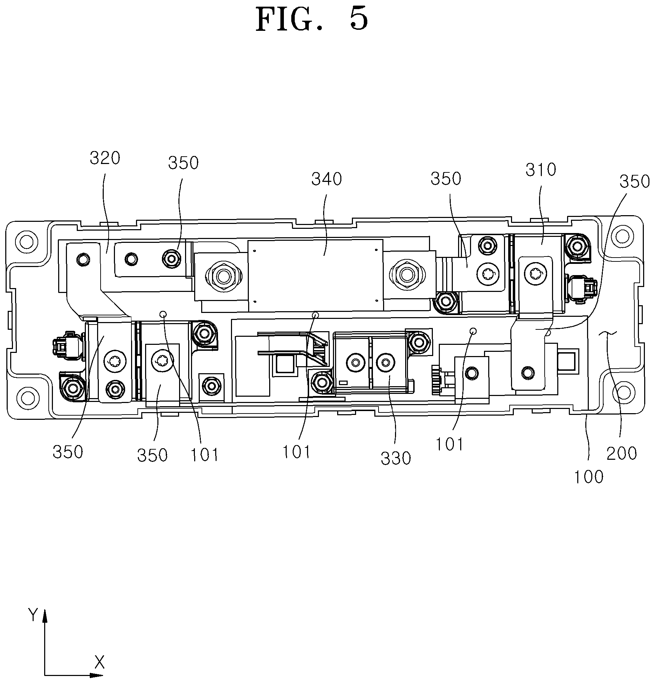

FIG. 4 is a perspective view schematically illustrating a configuration of a first case, a first accommodation unit, and a relay module according to one or more embodiments of the present disclosure, and FIG. 5 is a plan view schematically illustrating a configuration of the first case, the first accommodation unit, and the relay module according to one or more embodiments of the present disclosure.

Referring to FIGS. 2 to 5, the first case 100 may have a box shape with a hollow (e.g., defining a space), and an upper surface of the first case 100 may be open. A cross-sectional shape of the first case 100 may be changed in design to various shapes, such as circular, oval, and polygonal shapes, and also a quadrangular shape illustrated in FIGS. 2 and 3.

The first accommodation unit 200 may provide a space inside the first case 100 in which a relay module 300 (to be described below) is installed. The first accommodation unit 200 may be an empty space formed inside the first case 100 as the inside of the first case 100 is empty. An upper surface of the first accommodation unit 200 may connect with an external space of the first case 100 through the open top of the first case 100.

The relay module 300 may be installed in the first accommodation unit 200. The relay module 300 may serve as a component for providing a transmission path of a high-voltage current transmitted from the battery pack 1 to the inverter 2, or transmitted from the inverter 2 to the battery pack 1, and for controlling a flow of the high-voltage current.

The relay module 300 may include a first main relay 310, a second main relay 320, a pre-charge relay 330, a fuse 340, and a bus bar 350.

The first main relay 310 may have both ends respectively connected to a negative electrode terminal of the battery pack 1 and to a negative electrode terminal of the inverter 2. The first main relay 310 may block or allow a flow of a current between the negative electrode terminal of the battery pack 1 and the negative electrode terminal of the inverter 2 through a switching operation. The first main relay 310 may be various types of relay devices that may allow or block current transmission by contact of, or separation of, a movable contact point and a fixed contact point according to an ON/OFF operation of a solenoid.

The second main relay 320 may have both ends respectively connected to a positive electrode terminal of the battery pack 1 and to a positive electrode terminal of the inverter 2. The second main relay 320 may block or allow a flow of a current between the positive electrode terminal of the battery pack 1 and the positive electrode terminal of the inverter 2 through an opening and closing operation. The second main relay 320 may be various types of relay devices that may allow or block current transmission by contact of, or separation of, a movable contact point and a fixed contact point according to the ON/OFF operation of the solenoid.

The pre-charge relay 330 may be connected in parallel to the second main relay 320. As an example, the pre-charge relay 330 may have one end connected to a contact point between the battery pack 1 and the second main relay 320. The pre-charge relay 330 may have the other end connected to a contact point between the second main relay 320 and the capacitor. The pre-charge relay 330 can reduce or prevent damage to the first main relay 310 and the second main relay 320 potentially caused by an overcurrent or an inrush current during the operation of the first main relay 310 and the second main relay 320 by the opening and closing operation. The pre-charge relay 330 may be closed before the closing operation of the second main relay 320, and may charge the capacitor. The pre-charge relay 330 may be opened after charging of the capacitor is finished. The pre-charge relay 330 may be various types of relay devices that may allow or block current transmission by contact of, or separation of, a movable contact point and a fixed contact point according to the ON/OFF operation of the solenoid.

If an overcurrent flows into the relay module 300, the fuse 340 may block a flow of a current through the relay module 300 (e.g., may block power transmission between the battery pack 1 and the inverter 2). The fuse 340 may be various devices that may block the flow of the current by disconnection if the overcurrent is introduced. The fuse 340 may be connected in series to the first main relay 310 and the second main relay 320.

The bus bar 350 may serve as a component for providing an electrical connection path between the relay module 300 and the battery pack 1, between the relay module 300 and the inverter, and between internal components (e.g., between the first main relay 310, the second main relay 320, the pre-charge relay 330, and the fuse 340) of the relay module 300. The bus bar 350 may include an electrically conductive material, such as copper, nickel, or aluminum. A plurality of bus bars 350 may be provided. The plurality of bus bars 350 may be connected in various numbers and forms depending on series or parallel structures of the relay module 300 and the battery pack 1, the relay module 300 and the inverter, and/or the internal components of the relay module 300.

The first main relay 310, the second main relay 320, the pre-charge relay 330, the fuse 340, and the bus bar 350 may be located inside the first accommodation unit 200, and may have various arrangement forms inside the first accommodation unit 200. The first main relay 310, the second main relay 320, the pre-charge relay 330, the fuse 340, and the bus bar 350 may be spaced apart from a bottom surface of the first case 100. The first main relay 310, the second main relay 320, the pre-charge relay 330, the fuse 340, and the bus bar 350 may be supported in a state of being spaced apart from the bottom surface of the first case 100 by a separate support or the like extending from an inner wall surface of the first case 100.

The second case 400 may form an exterior of the other side of the power relay assembly 3, and may be stacked on the first case 100.

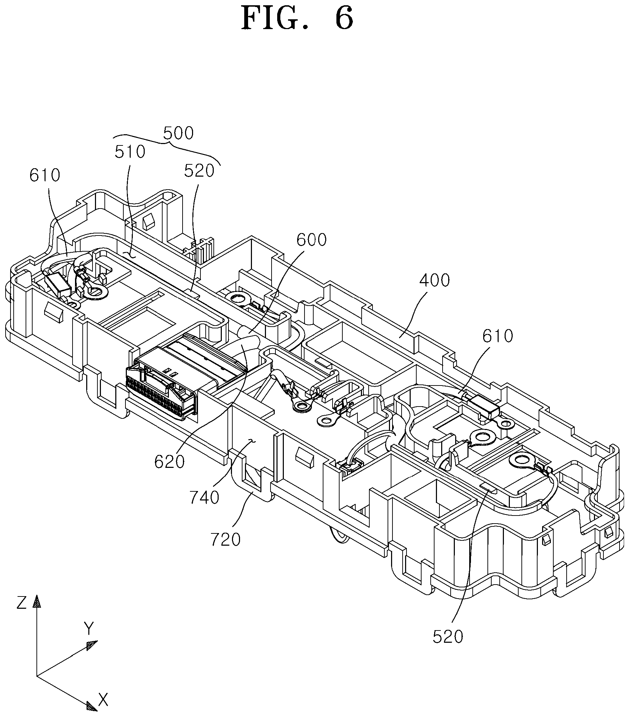

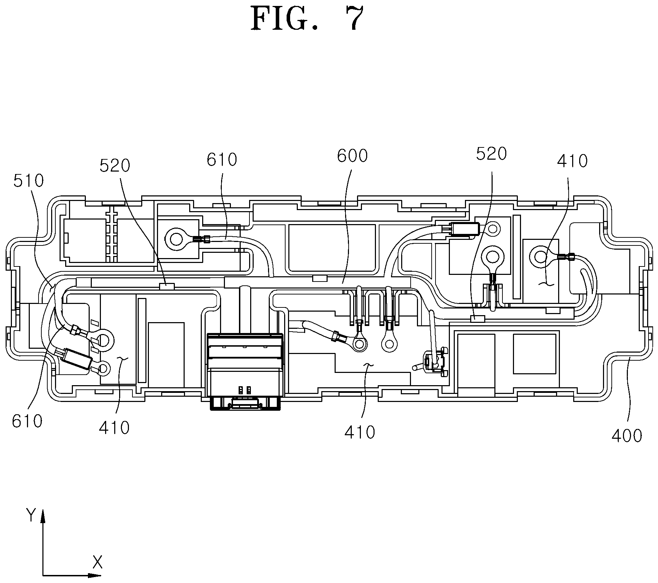

FIG. 6 is a perspective view schematically illustrating a configuration of a second case, a second accommodation unit, and a wire module according to one or more embodiments of the present disclosure, and FIG. 7 is a plan view schematically illustrating a configuration of the second case, the second accommodation unit, and the wire module according to one or more embodiments of the present disclosure.

Referring to FIGS. 2, 6, and 7, the second case 400 may have a substantially plate shape. A cross-sectional shape of the second case 400 may correspond to the cross-sectional shape of the first case 100. A lower end portion of the second case 400 may be seated on an upper end portion of the first case 100.

The second accommodation unit 500 may be located inside the second case 400, and may provide a space in which the wire module 600 to be described below is accommodated inside the second case 400. The second accommodation unit 500 may be separated from the first accommodation unit 200 by a lower side surface of the second case 400. A detailed configuration of the second accommodation unit 500 will be described below.

The wire module 600 may serve as a component for being connected to the relay module 300, and for providing a transmission path of a low-voltage current to the relay module 300. For example, the wire module 600 may transmit a control signal input to the relay module 300, or may transmit a current or voltage detection signal detected from the relay module 300. The wire module 600 may be connected to the BMS of the battery pack 1, and may receive a control signal for controlling the opening and closing operation of the relay module 300 from the BMS. In one or more embodiments, the wire module 600 may transmit the current or voltage detection signal detected from the relay module 300 to the BMS. The wire module 600 may include at least one cable capable of transmitting electrical signals.

The wire module 600 may be installed in the second accommodation unit 500 spatially isolated from the first accommodation unit 200. In one or more embodiments, the wire module 600 can reduce or prevent the likelihood of a loss of the control signal or detection signal due to interference with the relay module 300, by which a high-voltage current is electrically conductive.

The wire module 600 may be electrically connected to each component of the relay module 300 and the BMS through a plurality of branch wires 610. The branch wire 610 may extend in a form branched from the wire module 600. The plurality of branch wires 610 may be arranged in a longitudinal direction of the wire module 600. The plurality of branch wires 610 may be individually connected to the first main relay 310, the second main relay 320, the pre-charge relay 330, the fuse 340, the bus bar 350, and the BMS via bolting coupling, a connector, or the like.

A plurality of connection holes 410 vertically passing through the second case 400 to provide a connection path between the branch wire 610 and the relay module 300 may be formed on the second case 400.

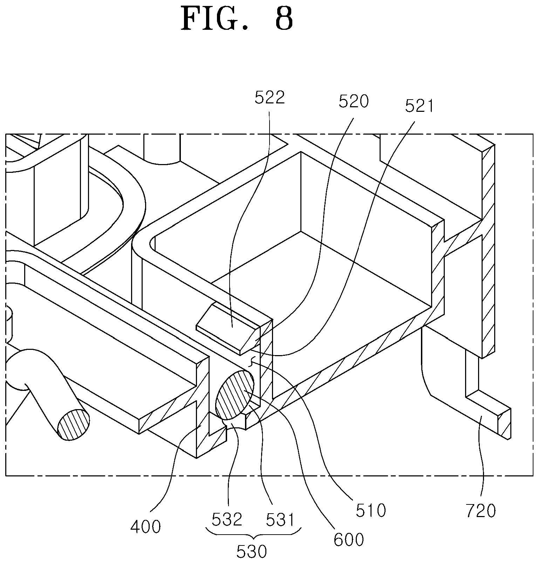

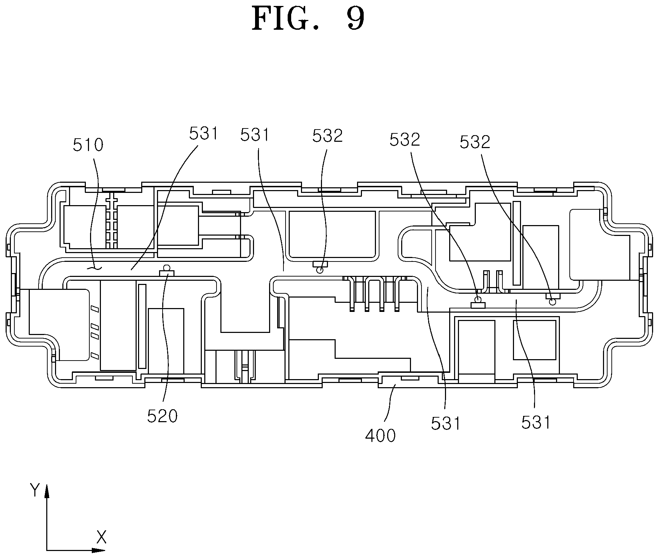

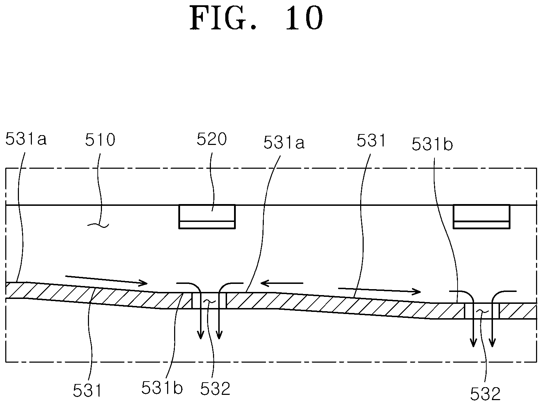

FIG. 8 is a perspective view schematically illustrating a configuration of a second accommodation unit according to one or more embodiments of the present disclosure, FIG. 9 is a plan view schematically illustrating a configuration of the second accommodation unit according to one or more embodiments of the present disclosure, and FIG. 10 is a cross-sectional view schematically illustrating a configuration of the second accommodation unit according to one or more embodiments of the present disclosure.

Referring to FIGS. 8 and 9, the second accommodation unit 500 may include an accommodation rail 510 and a fixing member 520.

The accommodation rail 510 may have a shape of a groove that is concavely recessed into the second case 400. The accommodation rail 510 may be concavely formed from an upper surface of the second case 400 toward a lower surface. In one or more embodiments, an upper surface of the accommodation rail 510 may be open. The accommodation rail 510 may extend to cross both sides of the second case 400. As an example, and referring to FIG. 9, the accommodation rail 510 may have both end portions spaced apart from each other in an X-axis direction, and may extend to cross the second case 400 in the X-axis direction. In one or more embodiments, some sections of the accommodation rail 510 may be curved in a direction crossing the X-axis direction, for example, in a direction substantially parallel to a Y-axis direction. A first direction described below may be a direction from one end portion (left end portion based on FIG. 9) of the accommodation rail 510 to the other end portion (right end portion based on FIG. 9) among directions parallel to an extension direction of the accommodation rail 510. As some sections of the accommodation rail 510 are formed to be curved in the direction parallel to the Y-axis direction, some sections in the first direction may also be curved in the direction substantially parallel to the Y-axis direction.

The wire module 600 may be inserted into the accommodation rail 510 through an open top surface of the accommodation rail 510. The wire module 600 may be supported by being seated on a bottom surface of the accommodation rail 510. A width and height of the accommodation rail 510 may be larger than a diameter of the wire module 600. In one or more embodiments, the wire module 600 may be easily inserted into the accommodation rail 510 to reduce or prevent interference with external components of the accommodation rail 510.

The fixing member 520 may protrude inwardly into the accommodation rail 510 to reduce or prevent the likelihood of the wire module 600 being separated from the accommodation rail 510. As an example, the fixing member 520 may have a shape of a protrusion protruding from an inner surface of the accommodation rail 510 in a direction crossing the extension direction of the accommodation rail 510.

The fixing member 520 may be spaced apart from the bottom surface of the accommodation rail 510 inside the accommodation rail 510. A distance between the fixing member 520 and the bottom surface of the accommodation rail 510 may be larger than the diameter of the wire module 600. In one or more embodiments, the fixing member 520 can reduce or prevent the likelihood of an excessive compressive force being applied to the wire module 600 accommodated in the accommodation rail 510, and can reduce or prevent the likelihood of the wire module 600 being separated from the accommodation rail 510.

The fixing member 520 may have a smaller cross-sectional area toward an end portion thereof.

As an example, the fixing member 520 may include a first surface 521 facing the bottom surface of the accommodation rail 510, and a second surface 522 substantially opposite to the first surface 521. The first surface 521 and the second surface 522 may be lower and upper surfaces of the fixing member 520, respectively, based on FIG. 8.

The first surface 521 may have a planar shape. The first surface 521 may be perpendicular to an insertion direction of the wire module 600 into the accommodation rail 510 (e.g., a Z-axis direction in FIG. 6). In one or more embodiments, the first surface 521 can more effectively reduce or prevent the likelihood of the wire module 600 accommodated in the accommodation rail 510 being separated from the accommodation rail 510.

The second surface 522 may have a curved shape. The second surface 522 may be rounded to reduce a distance from the first surface 521 toward the end portion of the fixing member 520. In one or more embodiments, the second surface 522 can reduce or prevent a phenomenon in which the wire module 600 is interfered by the fixing member 520, and is not inserted into the accommodation rail 510.

A plurality of fixing members 520 may be provided. The plurality of fixing members 520 may be arranged at set intervals in the extension direction of the accommodation rail 510. The distance and number of fixing members 520 may be variously changed in design depending on a length of the accommodation rail 510 or the like.

The second accommodation unit 500 may further include a drain member 530.

The drain member 530 may serve as a component for guiding the discharge of moisture introduced into the accommodation rail 510.

The drain member 530 may include an inclined surface 531 and a transmission hole 532.

The inclined surface 531 may be formed on the bottom surface of the accommodation rail 510. The inclined surface 531 may be formed separately from the bottom surface of the accommodation rail 510, may be located on the bottom surface of the accommodation rail 510, or may be formed integrally with the bottom surface of the accommodation rail 510.

The inclined surface 531 may include a first end portion 531a and a second end portion 531b at different respective heights. The second end portion 531b may be at a lower position than the first end portion 531a. In one or more embodiments, the inclined surface 531 may have a shape which is inclined downwardly from the first end portion 531a toward the second end portion 531b. In one or more embodiments, the inclined surface 531 may guide the moisture introduced into the accommodation rail 510 to flow in a direction from the first end portion 531a to the second end portion 531b.

The second end portion 531b of the inclined surface 531 may be spaced apart from the first end portion 531a in the first direction inside the accommodation rail 510. In one or more embodiments, the inclined surface 531 may be inclined downwardly in the first direction inside the accommodation rail 510.

A plurality of inclined surfaces 531 may be provided. The plurality of inclined surfaces 531 may be sequentially arranged in the first direction parallel to the extension direction of the accommodation rail 510.

Heights of the plurality of inclined surfaces 531 may decrease stepwise in the first direction. Referring to FIG. 10, the second end portion 531b of one of a pair of inclined surfaces 531 adjacent in the first direction, and located at a relatively higher position, may be located at the same height as the first end portion 531a of the other of the pair of inclined surfaces 531 that is located at a relatively lower position. As an example, the plurality of inclined surfaces 531 may be connected in a manner in which a downward slope section and a horizontal section alternately repeat along the first direction. In one or more embodiments, the plurality of inclined surfaces 531 may guide moisture to continuously flow in the first direction without stagnating between the adjacent inclined surfaces 531.

The transmission hole 532 may have a shape of a hole vertically passing through, or near, the second end portion 531b of the inclined surface 531. The transmission hole 532 may have an upper end portion connecting with the internal space of the accommodation rail 510, and a lower end portion connecting with the first accommodation unit 200. In one or more embodiments, the transmission hole 532 may discharge the moisture flowing to the second end portion 531b along the inclined surface 531 to the outside of the accommodation rail 510.

The transmission hole 532 may be located to directly face the bottom surface of the first case 100. In one or more embodiments, the transmission hole 532 may be misaligned with the components (e.g., the first main relay 310, the second main relay 320, the pre-charge relay 330, the fuse 340, and the bus bar 350) of the relay module 300 accommodated in the first accommodation unit 200. In one or more embodiments, the transmission hole 532 can reduce or prevent damage to the relay module 300 that may occur if the moisture discharged from the accommodation rail 510 flows into each component of the relay module 300.

A plurality of transmission holes 532 may be provided. The plurality of transmission holes 532 may individually pass through the second end portions 531b of different inclined surfaces 531.

Referring to FIG. 5, a discharge hole 101 for discharging the moisture introduced into the first accommodation unit 200 through the transmission hole 532 to the outside of the first case 100 may be formed on the bottom surface of the first case 100. The discharge hole 101 may have the shape of the hole vertically passing through the bottom surface of the first case 100. A plurality of discharge holes 101 may be provided. The number of plurality of discharge holes 101 may be the same as the number of plurality of transmission holes 532. The plurality of discharge holes 101 may be located at positions which individually face different transmission holes 532.

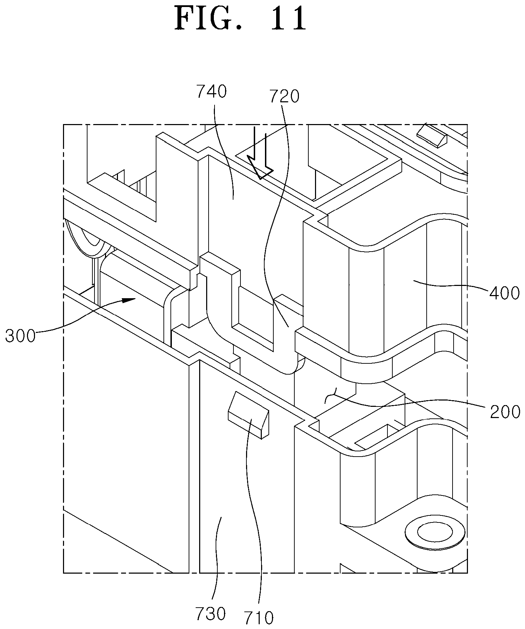

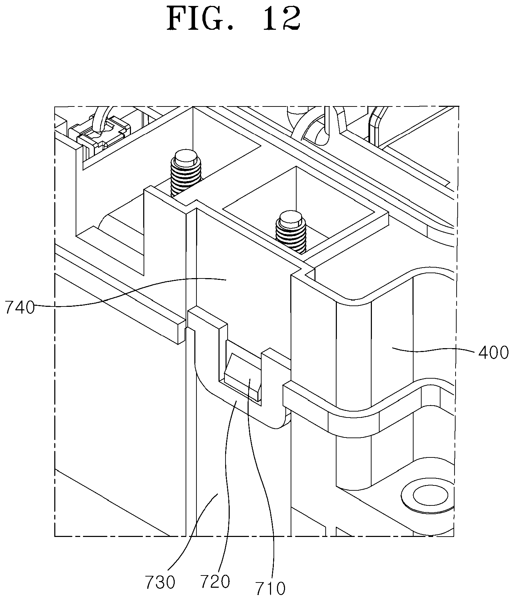

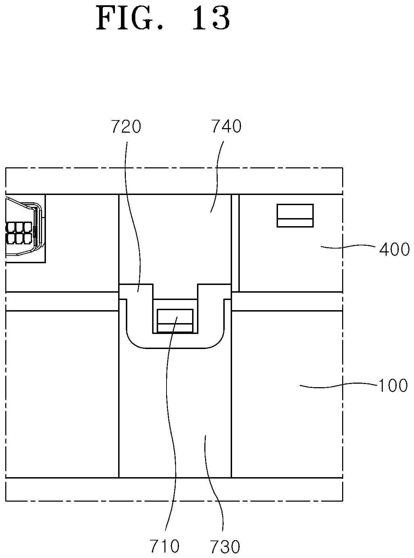

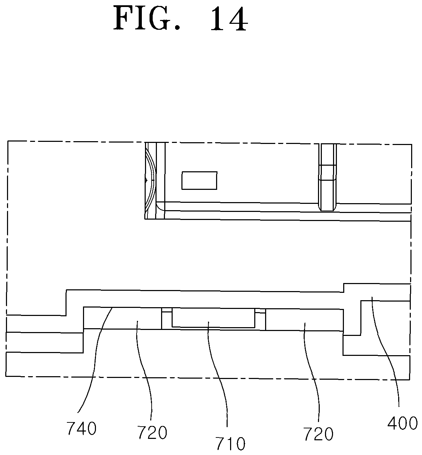

FIGS. 11 and 12 are perspective views schematically illustrating a fastening structure of the first case and the second case according to one or more embodiments of the present disclosure, FIG. 13 is a front view schematically illustrating a fastening structure of the first case and the second case according to one or more embodiments of the present disclosure, and FIG. 14 is a plan view schematically illustrating a fastening structure of the first case and the second case according to one or more embodiments of the present disclosure.

Referring to FIGS. 11 to 14, the power relay assembly 3 may further include a first fastening member 710 and a second fastening member 720.

The first fastening member 710 may be connected to any one of the first case 100 or the second case 400. Hereinafter, although an example in which the first fastening member 710 is connected to the first case 100 will be described, the first fastening member 710 is not limited thereto, and may also be connected to the second case 400.

As an example, the first fastening member 710 may have a hook shape protruding from a side surface of the first case 100. A plurality of first fastening members 710 may be provided. The plurality of first fastening members 710 may be spaced apart from each other along a perimetric surface of the first case 100.

The second fastening member 720 may be connected to the other of the first case 100 and the second case 400. Hereinafter, an example in which the second fastening member 720 is connected to the second case 400, as the first fastening member 710 is connected to the first case 100, will be described, but the second fastening member 720 is not limited thereto, and may be connected to the first case 100 in one or more embodiments. The second fastening member 720 may be coupled to the first fastening member 710 as the second case 400 is seated on the first case 100, and may fix the second case 400 to the first case 100.

As an example, the second fastening member 720 may have a plate shape extending from a side surface of the second case 400. As the second case 400 is seated on the first case 100, a through hole (into which the first fastening member 710 may be inserted) may be formed in the second fastening member 720. A lower end portion of the second fastening member 720 may protrude downwardly from the second case 400. The second fastening member 720 may be located to face the side surface of the first case 100 as the second case 400 is seated on the first case 100, and may be coupled to the first fastening member 710. A plurality of second fastening members 720 may be provided. The plurality of second fastening members 720 may be spaced apart from each other along the perimetric surface of the second case 400. The number of plurality of second fastening members 720 may be the same as the number of first fastening members 710. The plurality of second fastening members 720 may be located at positions that may be fastened to different first fastening members 710.

The power relay assembly 3 may further include a first alignment groove 730 and a second alignment groove 740.

The first alignment groove 730 and the second alignment groove 740 may serve as a structure that guides a fastening operation of the first fastening member 710 and the second fastening member 720.

Hereinafter, an example in which the first alignment groove 730 and the second alignment groove 740 are formed in the first case 100 and the second case 400, respectively, will be described. In one or more embodiments, the first alignment groove 730 and the second alignment groove 740 are not limited thereto, and may be respectively formed on the second case 400 and the first case 100 according to the positions of the first fastening member 710 and the second fastening member 720.

The first alignment groove 730 may have a shape of a groove that is concavely recessed into the first case 100. The first alignment groove 730 may extend lengthwise in a vertical direction. An upper end portion of the first alignment groove 730 may pass through the upper end portion of the first case 100, and may connect with a top space of the first case 100. The first fastening member 710 may be located inside the first alignment groove 730. A plurality of first alignment grooves 730 may be provided. The plurality of first fastening members 710 may be respectively individually located in different first alignment grooves 730.

The second alignment groove 740 may have a shape of a groove which is concavely recessed into the second case 400. The second alignment groove 740 may extend lengthwise in the vertical direction. A lower end portion of the second alignment groove 740 may pass through the lower end portion of the second case 400, and may connect with a bottom space of the second case 400. The second fastening member 720 may be located inside the second alignment groove 740. A plurality of second alignment grooves 740 may be provided. The plurality of second fastening members 720 may be respectively individually located in different second alignment grooves 740.

The first alignment groove 730 and the second alignment groove 740 may connect with each other as the first fastening member 710 and the second fastening member 720 are aligned. In one or more embodiments, if the first fastening member 710 and the second fastening member 720 are aligned to the correct positions, it may mean that the first fastening member 710 and the second fastening member 720 are located side by side in the Z-axis direction. In one or more embodiments, if the first alignment groove 730 and the second alignment groove 740 connect with each other, it may mean that the upper end portion of the first alignment groove 730 matches the lower end portion of the second alignment groove 740, and the internal space of the first alignment groove 730 and the internal space of the second alignment groove 740 may be connected as one.

If the second case 400 is seated on the first case 100 in a state in which the first alignment groove 730 and the second alignment groove 740 connect with each other, the end portion of the second fastening member 720 protruding to the outside of the second case 400 may be inserted into the first alignment groove 730, and a relative position to the first fastening member 710 may be aligned.

Referring to FIG. 3, the power relay assembly 3 may further include a cover 800. The cover 800 may have a plate shape located to cover the second accommodation unit 500 at the top of the second case 400. In one or more embodiments, the cover 800 can reduce or prevent external foreign substances flowing into the second accommodation unit 500, and may protect the wire module 600 accommodated in the second accommodation unit 500 from being applied by an impact from the outside. The cover 800 may be coupled to the second case 400 by various types of coupling methods, such as bolting, welding, fitting, and hooking.

While the present disclosure has been described with reference to embodiments shown in the drawings, these embodiments are merely illustrative and it should be understood that various modifications and equivalent other embodiments can be derived by those skilled in the art on the basis of the embodiments. The technical scope of the present disclosure is defined by the appended claims, with functional equivalents thereof to be included therein.

## Claims

1. A power relay assembly (3) comprising:
a first case (100);
a first accommodation unit (200) inside the first case (100);
a relay module (300) in the first accommodation unit (200), and configured to control a flow of a current;
a second case (400) on the first case (100);
a second accommodation unit (500) inside the second case (400), and separated from the first accommodation unit (200); and
a wire module (600) in the second accommodation unit (500), and connected to the relay module (300).

2. The power relay assembly (3) as claimed in claim 1, wherein the second accommodation unit (500) comprises:
an accommodation rail (510) recessed into the second case (400) for receiving the wire module (600); and
a fixing member (520) protruding inwardly to the accommodation rail (510), and configured to prevent the wire module (600) from being separated from the accommodation rail (510).

3. The power relay assembly (3) as claimed in claim 2, wherein the fixing member (520) is spaced apart from a bottom surface of the accommodation rail (510).

4. The power relay assembly (3) as claimed in claim 2 or 3, wherein the fixing member (520) has a smaller cross-sectional area toward an end portion thereof.

5. The power relay assembly (3) as claimed in any one of claims 2 to 4, wherein the fixing member (520) comprises:
a first surface (521) facing a bottom surface of the accommodation rail (510); and
a second surface (522) substantially opposite to the first surface, and having a curved shape.

6. The power relay assembly (3) as claimed in claim 5, wherein the first surface (521) has a planar shape, and is substantially perpendicular to an insertion direction of the wire module (600) into the accommodation rail (510).

7. The power relay assembly (3) as claimed in any one of claims 2 to 6, wherein the second accommodation unit (500) further comprises a drain member (530) configured to discharge moisture from the accommodation rail (510).

8. The power relay assembly (3) as claimed in claim 7, wherein the drain member (530) comprises an inclined surface (531) on a bottom surface of the accommodation rail (510), and comprising a first end portion (531a), and a second end portion (531b) that is lower than the first end portion (531a), and
wherein the drain member (530) defines a transmission hole (532) adjacent the second end portion (531b), and connecting with the first accommodation unit (200).

9. The power relay assembly (3) as claimed in claim 8, wherein the inclined surface (531) is provided in plural, the inclined surfaces (531) being arranged along a first direction that is substantially parallel to an extension direction of the accommodation rail (510).

10. The power relay assembly (3) as claimed in claim 9, wherein respective heights of the inclined surfaces (531) decrease along the first direction.

11. The power relay assembly (3) as claimed in any one of claims 8 to 10, wherein the transmission hole (532) faces a bottom surface of the first case (100).

12. The power relay assembly (3) as claimed in claim 11, wherein the bottom surface of the first case (100) defines a discharge hole (101) for discharging moisture from the first accommodation unit (200) to outside the first case (100).

13. The power relay assembly (3) as claimed in any one of the preceding claims, further comprising:
a first fastening member (710) connected to one of the first case (100) or the second case (400); and
a second fastening member (720) connected to another of the first case (100) or the second case (400), and configured to be coupled to the first fastening member (710) as the second case (400) is seated on the first case (100).

14. The power relay assembly (3) as claimed in claim 13, wherein the one of the first case (100) or the second case (400) defines a first alignment groove (730),
wherein the another of the first case (100) or the second case (400) defines a second alignment groove (740) configured, and
wherein the first alignment groove (730) and the second alignment groove (740) align with each other as the first fastening member (710) and the second fastening member (720) face each other.

15. A battery system comprising:
a battery pack (1);
an inverter (2) connected to the battery pack (1); and
a power relay assembly (3) between the battery pack (1) and the inverter (2), and comprising:
a first case (100);
a first accommodation unit (200) inside the first case (100);
a relay module (300) in the first accommodation unit (200), and configured to control a flow of a current;
a second case (400) on the first case (100);
a second accommodation unit (500) inside the second case (400), and separated from the first accommodation unit (200); and
a wire module (600) in the second accommodation unit (500), and connected to the relay module (300).
